# FASCICULE DE BREVET EUROPEEN

(11) **EP 1 632 709 B1**
(45) Date de publication et mention de la délivrance du brevet: **02.01.2008**
(21) Numéro de dépôt: 05291598.0
(22) Date de dépôt: 26.07.2005
(51) Int. Cl.: F21S 8/00

(54) **Dispositif d'éclairage et/ou de signalisation à guide de lumière**
Signal- oder Beleuchtungseinrichtung mit einem Lichtleiter
Signalling and/or lighting device comprising a light guide

(30) Priorité: 07.09.2004 FR 0409477
(43) Date de publication de la demande: 08.03.2006
(73) Titulaire: VALEO VISION, 93012 Bobigny Cédex (FR)
(72) Inventeur: De Lamberterie, Antoine, 75019 Paris (FR)

(56) Documents cités:
- DE-A1- 19 857 561
- US-A- 5 921 652

## Description

L'invention est relative à un dispositif d'éclairage et/ou de signalisation du genre de ceux qui comprennent au moins une source lumineuse éclairant un guide de lumière dont une partie de la surface présente des aspérités propres à diffuser vers l'extérieur une partie de la lumière qui se propage dans le guide, au moins une face d'extrémité du guide éloignée de la source comportant un moyen de réflexion de la lumière vers l'intérieur du guide.

L'invention concerne plus particulièrement, mais non exclusivement, un tel dispositif d'éclairage et/ou de signalisation pour véhicule automobile.

Des dispositifs de ce type sont connus, par exemple d'après EP-0 515 921. L'extrémité du guide de lumière opposée à celle de la source est rendue réfléchissante, généralement par aluminiage, pour renvoyer la lumière vers l'intérieur du guide. En l'absence de ce moyen de réflexion, la lumière sortirait et serait perdue. Toutefois, le processus pour rendre l'extrémité réfléchissante, notamment par aluminiage, coûte cher et nécessite des investissements importants. En outre, il est délicat d'aluminer l'extrémité du guide sans toucher aux flancs du guide lui-même. Enfin, la réflexion sur une face aluminée se fait avec une perte supplémentaire d'énergie de l'ordre de 10 %. Le document DE 198 57 561 montre un guide dont l'extrémité est en forme de biseau.

Il serait possible d'améliorer l'homogénéité de l'aspect du guide en prévoyant au moins une source lumineuse à chaque extrémité du guide lumineux, mais une telle solution est beaucoup plus chère et un circuit électrique doit s'étendre le long du guide. Ceci est d'autant plus gênant lorsque la source lumineuse est une diode électroluminescente pilotée par un circuit électronique.

L'invention a pour but, surtout, de fournir un dispositif d'éclairage et/ou de signalisation du genre défini précédemment qui, tout en n'étant éclairé qu'à une extrémité, permet d'obtenir un aspect homogène avec un rendement lumineux amélioré, tout en restant d'une fabrication relativement économique.

Selon l'invention, le dispositif d'éclairage et/ou de signalisation, en particulier pour véhicule automobile, comprend :
- au moins une source lumineuse éclairant un guide de lumière dont une partie de la surface présente des zones diffusantes et/ou réfléchissantes localement propres à diffuser/renvoyer vers l'extérieur une partie de la lumière qui se propage dans le guide,
- au moins une face d'extrémité du guide éloignée de la source comportant un moyen de réflexion de la lumière vers l'intérieur du guide, le moyen de réflexion comprenant :

- au moins un coin de cube saillant vers l'extérieur présentant trois facettes en trièdre trirectangle, ce coin de cube étant prévu dans la matière du guide de lumière de manière à provoquer trois réflexions successives de rayons tombant sur l'une des facettes dans des conditions de réflexion totale, pour les renvoyer dans le guide suivant une direction sensiblement parallèle à la direction incidente desdits rayons, ou
- au moins un dit coin de cube et au moins un coin saillant vers l'extérieur et biseauté présentant deux facettes, ce coin étant prévu pour renvoyer les rayons incidents dans le guide.

La lumière arrivant à l'extrémité du guide est renvoyée dans celui-ci dans des conditions optimales pour son exploitation en sens inverse et pour améliorer l'homogénéité et les performances.

De préférence, le moyen de réflexion comporte plusieurs coins biseautés ou plusieurs coins de cube saillants vers l'extérieur. Avantageusement, la diagonale partant du sommet du coin de cube est parallèle à la direction moyenne du guide de lumière.

De préférence, les profils des coins biseautés ou des coins de cube sont moulés d'une seule pièce avec le guide de lumière.

Le guide de lumière peut avoir une forme allongée, cylindrique ou prismatique. Dans cette configuration, les coins biseautés ou les coins de cube sont de préférence prévus à une seule extrémité longitudinale, la(les) source(s) lumineuse(s) étant prévue(s) à l'autre extrémité.

Le ou les coins biseautés ou les coins de cube couvrent avantageusement toute la surface d'extrémité du guide de lumière opposée à la source.

Le guide de lumière peut être aussi être en forme de nappe dont au moins une grande face est munie de motifs pour diffuser/réfléchir la lumière vers l'extérieur. Notamment dans cette configuration, la (les) source(s) lumineuse(s) sont placée(s) contre l'un des bords de la nappe, et les coins biseautés ou les coins de cube sont prévus au moins sur le bord opposé de la nappe. Les coins biseautés ou les coins de cube peuvent être prévus sur tous les bords de la nappe autres que celui éclairé.

Les coins de cube à trois facettes ou les coins du biseau à deux facettes ont une longueur d'arête de préférence d'au plus d'environ 10 mm, et avantageusement d'au moins 1 mm. Par exemple, elle est d'environ 1 à 3 mm, notamment d'environ 2 mm. Le choix de leur dimensionnement dépend notamment de la dimension du guide optique utilisé, notamment de la section du guide qui est de type linéaire ou de l'épaisseur du guide sous forme de nappe ou d'écran. Ce choix dépend aussi du nombre de coins de cube ou de coins biseautés que l'on veut placer sur le bord du guide, et de leur faisabilité industrielle.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une vue schématique de dessus d'un dispositif de signalisation avec une source lumineuse et un guide optique selon l'invention.
Fig. 2 est une vue à plus grande échelle de l'extrémité du guide opposée à la source lumineuse, selon la flèche II de Fig. 1.
Fig. 3 est un schéma en perspective de la triple réflexion d'un rayon sur les trois facettes d'un coin de cube, et
Fig. 4 est un schéma en perspective d'un guide optique constitué par une nappe.

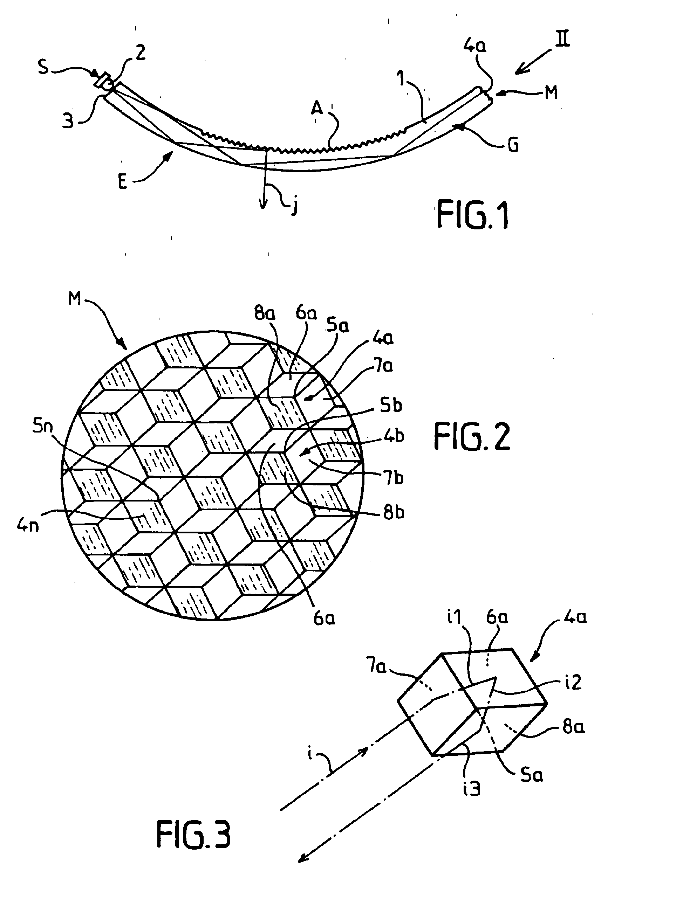

En se reportant à Fig. 1 du dessin, on peut voir un dispositif d'éclairage et/ou de signalisation E, notamment pour véhicule automobile, comprenant au moins une source lumineuse S éclairant un guide de lumière G dont une partie de la surface présente des motifs diffusants/ des aspérités A propres à diffuser vers l'extérieur une partie de la lumière qui se propage dans le guide.

Selon Fig. 1, le guide G est formé par une tige 1 à section transversale circulaire, Cette tige peut avoir la forme d'une portion de courbe ou d'une portion de droite, ou de la juxtaposition de différentes portions courbes et/ou linéaires. Ici, à titre d'illustration, elle est cintrée suivant sensiblement un arc de cercle. La source lumineuse S est constituée, par exemple, par une diode électroluminescente ou LED 2 appliquée contre une face d'extrémité plane 3 de la tige 1. Les aspérités A sont formées, par exemple, par des stries prévues dans la zone centrale de la partie concave de la tige cintrée 1.

Les rayons lumineux se propagent à l'intérieur du guide G et subissent des réflexions totales à la surface de séparation avec l'air. Certains de ces rayons tombent sur les motifs A et sont renvoyés vers l'extérieur comme illustré par le rayon j.

L'extrémité de la tige 1 opposée à la source lumineuse 2 comporte un moyen de réflexion M et est constituée par au moins un, et de préférence plusieurs coins de cube 4a, 4b ... 4n saillants vers l'extérieur.

Le ou les coins de cube couvrent toute la surface d'extrémité de la tige 1.

Chaque coin de cube présente trois facettes en trièdre trirectangle. Le sommet 5a, 5b... 5n du coin de cube est en saillie vers l'extérieur. Sur Fig. 2, les trois facettes 6a, 7a, 8a d'un coin de cube apparaissent. En supposant que le motif illustré sur Fig. 2 soit éclairé de la droite vers la gauche suivant une direction sensiblement inclinée à 45°, les faces telles que 8a se trouvent dans l'ombre, ce qui a été symbolisé par des hachures interrompues.

De préférence, la diagonale partant d'un sommet tel que 5a de coin de cube est parallèle à la direction moyenne de la partie du guide de lumière voisine des coins de cube.

Le guide de lumière 1 est réalisé en verre ou en matière plastique transparente. Les coins de cube 4a ... 4n sont avantageusement moulés d'une seule pièce avec le guide de lumière G.

Fig. 3 illustre de manière schématique l'effet produit par un coin de cube. Selon Fig. 3, on a représenté la partie concave du trièdre constitué par le coin de cube 4a, sans toutefois représenter la tige 1. Le sommet 5a est à considérer comme étant en arrière du plan de figure : le rayon incident i se trouve dans la matière de la tige 1 et tombe sur la facette 7a sans sortir de la matière de la tige 1. L'angle d'incidence est tel que le rayon i subit une première réflexion totale sur la facette 7a et est renvoyé, toujours à l'intérieur de la matière de la tige 1, contre la facette 6a selon le rayon i1. Ce rayon i1 subit une réflexion totale sur la face 6a pour être renvoyé suivant le rayon i2 vers la facette 8a, toujours à l'intérieur de la matière de la tige 1. Le rayon i2 est réfléchi par la facette 8a suivant le rayon i3 parallèle à la direction de i, à l'intérieur de la tige 1.

Ainsi, le rayon incident i subit trois réflexions successives sur les facettes du coin de cube et est renvoyé dans le guide 1 suivant une direction parallèle à la direction incidente i, quelle que soit l'orientation de cette dernière, lorsque la propriété de réflexion totale est assurée. C'est le cas pour les rayons peu inclinés par rapport à la direction moyenne du guide 1 au niveau de l'extrémité munie du moyen de réflexion M. Les rayons peu inclinés sont les plus utilisés pour assurer la photométrie, et sont les plus intéressants.

L'ensemble des trois facettes 6a, 7a, 8a, qui forment trois plans orthogonaux les uns par rapport aux autres, permet d'exploiter au mieux la lumière en sens inverse pour améliorer l'homogénéité et les performances du dispositif de signalisation ou d'éclairage.

La longueur des arêtes du coin de cube est par exemple inférieure ou égale à 10 mm, notamment de l'ordre de 1 à 2 mm.

Le diamètre de la tige 1 formant guide optique peut être de l'ordre de 1 cm. La longueur du guide 1 peut être de plusieurs dizaines de centimètres.

Un tel dispositif peut servir, notamment, de lanterne pour un véhicule automobile, d'éclairage intérieur, par exemple pour des accoudoirs, des plafonniers, les coffres, les boites à gants, les tableaux de bord, pour éclairer des bas de portes, pour tout éclairage d'ambiance, pour souligner des formes du véhicule, ou pour toute autre application, notamment pour des feux de direction.

Les profils de coins biseautés ou des coins de cube, comme déjà indiqué, sont obtenus avec le moulage du guide. Le seul surcoût dans la pièce formée par le guide est lié à l'outillage du moule et par le fait qu'un tiroir est nécessaire pour sortir la pièce. Ce surcoût est négligeable comparé au coût de l'aluminiage de l'extrémité.

Les rayons réfléchis par les coins de cube profitent de la propriété de réflexion totale dont l'efficacité en terme énergétique est de 100 %.

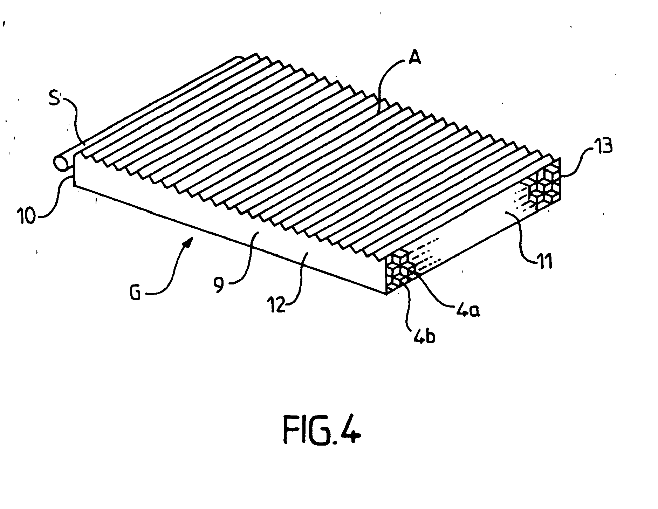

Fig. 4 illustre une variante selon laquelle le guide de lumière G est constitué par une nappe 9 en matière transparente, par exemple de forme sensiblement parallélépipédique. Les motifs diffusants A sont prévus sur l'une des grandes faces de cette nappe ou plaque, sous la forme de stries. La (ou les) source(s) lumineuse(s) S est (sont) placée(s) contre un bord 10 de la nappe 9.

Les coins de cube sont prévus au moins sur le bord 11 opposé à la source S. Optionnellement, comme représenté, des coins de cube 4a, 4b ... sont prévus sur les autres bords 12, 13 de la nappe. Mais la présence des coins de cube sur le bord 11 suffit à remplir la fonction recherchée.

Lorsque la source S est allumée, la nappe 9 présente sur sa grande face opposée à celle munie des motifs A un aspect éclairé homogène.

Les avantages exposés précédemment sont conservés dans le cas où le guide de lumière G est constitué par une telle nappe.

On a mentionné des motifs A diffusants : alternativement ou conjointement, on peut aussi prévoir, notamment quand il s'agit d'un guide de lumière sous forme de nappe, d'écran, des motifs qui sont réfléchissants plutôt que diffusants. Un même écran peut aussi être muni à la fois de motifs diffusants et de motifs réfléchissants.

Alternativement aux coins de cube représentés aux figures, on peut utiliser des coins en biseau, notamment dans le cas des guides de lumière de type courbe ou linéaire. : On a alors deux facettes formant un coin substantiellement à angle droit, comme un toit, ou une succession de toits si on juxtapose plusieurs de ces coins biseautés. Dans ce cas, les rayons issus du guide frappant le coin biseauté sont renvoyés dans le guide, mais pas nécessairement selon une direction parallèle à la direction incidente : les rayons repartent en faisant un angle par rapport à l'axe du guide optique qui est symétrique par rapport à l'angle entre le rayon incident et ledit axe optique. La valeur absolue de l'angle par rapport à l'axe optique du guide reste ainsi généralement inchangée. Une face d'extrémité comportant un coin en biseau est décrite dans le document DE 198 57 561.

## Revendications

1. Dispositif d'éclairage et/ou de signalisation, en particulier pour véhicule automobile, comprenant
- au moins une source lumineuse (S), éclairant un guide de lumière (G) dont une partie de la surface présente des zones diffusantes et/ou réfléchissantes localement (A) propres à diffuser/renvoyer vers l'extérieur une partie de la lumière qui se propage dans le guide,
- au moins une face d'extrémité du guide éloignée de la source comportant un moyen (M) de réflexion de la lumière vers l'intérieur du guide,
**caractérisé en ce que** le moyen de réflexion (M) comprend
- au moins un coin de cube (4a) saillant vers l'extérieur présentant trois facettes (6a,7a,8a) en trièdre trirectangle, ce coin de cube étant prévu dans la matière du guide de lumière de manière à provoquer trois réflexions successives (i1,i2,i3) de rayons (i) tombant sur l'une des facettes dans des conditions de réflexion totale, pour les renvoyer dans le guide suivant une direction sensiblement parallèle à la direction incidente desdits rayons, ou
- au moins un dit coin de cube (4a) et au moins un coin saillant vers l'extérieur et biseauté présentant deux facettes, ce coin étant prévu pour renvoyer les rayons incidents dans le guide.

2. Dispositif selon la revendication 1, **caractérisé en ce que** le moyen de réflexion (M) comporte plusieurs coins biseautés ou plusieurs coins de cube (4a,4b,...4n) saillants vers l'extérieur.

3. Dispositif selon l'une quelconque des revendications précédentes, **caractérisé en ce que** la diagonale partant du sommet (5a, 5b,...5n) du coin de cube est parallèle à la direction moyenne du guide de lumière.

4. Dispositif selon l'une quelconque des revendications précédentes, **caractérisé en ce que** les profils des coins biseautés ou des coins de cube (4a, 4b, ...4n) sont moulés d'une seule pièce avec le guide de lumière (G).

5. Dispositif selon l'une quelconque des revendications précédentes, **caractérisé en ce que** les coins biseautés ou les coins de cube (4a, 4b, ...4n) couvrent toute la surface d'extrémité du guide de lumière opposée à la source.

6. Dispositif selon l'une quelconque des revendications précédentes, **caractérisé en ce que** le guide de lumière (G) a une forme allongée (1), notamment cylindrique ou prismatique.

7. Dispositif selon la revendication 6, **caractérisé en ce que** le ou les coins de cube (4a, 4b, ...4n) ou le ou les coins biseautés sont prévus à une seule extrémité longitudinale, la(les) source(s) lumineuse(s) étant prévue(s) à une autre extrémité.

8. Dispositif selon l'une des revendications 1 à 5, **caractérisé en ce que** le guide de lumière (G) est en forme de nappe (9) dont au moins une grande face est munie de motifs pour diffuser ou réfléchir la lumière vers l'extérieur.

9. Dispositif selon la revendications 8, **caractérisé en ce que** la (les) source(s) lumineuse(s) sont placée(s) contre l'un (10) des bords de la nappe, et **en ce que** les coins de cube (4a,4b...) ou les coins biseautés sont prévus au moins sur le bord opposé (11 ) de la nappe.

10. Dispositif selon l'une quelconque des revendications précédentes, **caractérisé en ce que** les arêtes des coins de cube ou des coins biseautés (4a, 4b, ...4n) ont une longueur d'environ 10 mm au maximum.

11. Dispositif selon l'une quelconque des revendications précédentes, **caractérisé en ce qu**'il s'agit d'un feu de véhicule ou d'un éclairage d'intérieur de véhicule.

## Claims

1. Lighting and/or signalling device, in particular for a motor vehicle, comprising:
- a least one source of light (S) which lights a light guide (G), part of the surface of which has areas which diffuse and/or reflect locally (A), which can diffuse/return to the exterior part of the light which is propagated in the guide; and
- at least one end face of the guide which is spaced from the source, and comprises a means (M) for reflection of light towards the interior of the guide, **characterised in that** the means for reflection (M) comprises:
- at least one cube block (4a) which projects towards the exterior and has three facets (6a,7a,8a) in the form of a tri-rectangular trihedron, this cube block being provided in the material of the light guide, such as to give rise to three successive reflections (i1,i2,i3) of rays (i) which meet one of the facets in conditions of total reflection, in order to return the rays in the guide according to a direction which is substantially parallel to the incident direction of the said rays; or
- at least one said cube block (4a) and at least one block which projects towards the exterior and is bevelled, with two facets, this block being designed to return the incident rays in the guide.

2. Device according to claim 1, **characterised in that** the means for reflection (M) comprises a plurality of bevelled blocks or a plurality of cube blocks (4a,4b,...4n) which project towards the exterior.

3. Device according to any one of the preceding claims, **characterised in that** the diagonal which starts from the summit (5a,5b,...5n) of the cube block is parallel to the mean direction of the light guide.

4. Device according to any one of the preceding claims, **characterised in that** the profiles of the bevelled blocks or the cube blocks (4a, 4b, ...4n) are moulded integrally with the light guide (G).

5. Device according to any one of the preceding claims, **characterised in that** the bevelled blocks or cube blocks (4a,4b,...4n) cover the entire end surface of the light guide opposite the source.

6. Device according to any one of the preceding claims, **characterised in that** the light guide (G) has an elongate form (1), which in particular is cylindrical or prismatic.

7. Device according to claim 6, **characterised in that** the cubes block(s) (4a,4b,...4n) or the bevelled block(s) is/are provided at a single longitudinal end, the light source(s) being provided at another end.

8. Device according to one of claims 1 to 5, **characterised in that** the light guide (G) is in the form of a sheet (9), at least one large face of which is provided with patterns to diffuse or reflect the light towards the exterior.

9. Device according to claim 8, **characterised in that** the source(s) of light is/are placed against one (10) of the edges of the sheet, and **in that** the cube blocks (4a,4b,...) or the bevelled blocks are provided at least on the opposite edge (11) of the sheet.

10. Device according to any one of the preceding claims, **characterised in that** the ridges of the cube blocks or of the bevelled blocks (4a, 4b,...4n) have a length of approximately 10 mm maximum.

11. Device according to any one of the preceding claims, **characterised in that** it relates to a vehicle light or interior lighting of a vehicle.

## Patentansprüche

1. Beleuchtungs- und/oder Signalgebungseinrichtung, insbesondere für ein Kraftfahrzeug, mit
- wenigstens einer Lichtquelle (S), die einen Lichtleiter (G) beleuchtet, von dem ein Teil der Oberfläche lokal lichtstreuende und/oder reflektierende Bereiche aufweist, die einen Teil des Lichts, das sich in dem Lichtleiter ausbreitet, nach außen zu streuen/reflektieren vermögen,
- wenigstens einer von der Lichtquelle entfernten Stirnseite des Lichtleiters, die ein Mittel (M) zur Reflexion des Lichts in den Lichtleiter aufweist,
**dadurch gekennzeichnet, dass** das Reflexionsmittel (M) umfasst
- wenigstens eine nach außen vorstehende Kubusecke (4a), die drei Facetten (6a, 7a, 8a) in Form eines Trieders mit drei rechten Winkeln aufweist, wobei die Kubusecke in dem Werkstoff des Lichtleiters derart vorgesehen ist, dass drei aufeinanderfolgende Reflexionen (i1, i2, i3) von Strahlen (i) bewirkt werden, die auf eine der Facetten unter Totalreflexionsbedingungen auftreffen, um sie in einer im Wesentlichen zu der Einfallrichtung der Strahlen parallelen Richtung in den Lichtleiter zurückzustrahlen, oder
- wenigstens eine solche Kubusecke (4a) und wenigstens eine nach außen vorstehende und abgeschrägte Ecke mit zwei Facetten, wobei die Ecke dazu vorgesehen ist, die einfallenden Strahlen in den Lichtleiter zurückzustrahlen.

2. Einrichtung nach Anspruch 1,
**dadurch gekennzeichnet, dass** das Reflexionsmittel (M) mehrere abgeschrägte Ecken oder mehrere nach außen vorstehende Kubusecken (4a, 4b,...4n) aufweist.

3. Einrichtung nach einem der vorhergehenden Ansprüche,
**dadurch gekennzeichnet, dass** die vom Scheitel (5a, 5b,...5n) der Kubusecke ausgehende Diagonale zur mittleren Richtung des Lichtleiters parallel ist.

4. Einrichtung nach einem der vorhergehenden Ansprüche,
**dadurch gekennzeichnet, dass** die Profile der abgeschrägten Ecken oder der Kubusecken (4a, 4b,...4n) mit dem Lichtleiter (G) in einem Stück geformt sind.

5. Einrichtung nach einem der vorhergehenden Ansprüche,
**dadurch gekennzeichnet, dass** die abgeschrägten Ecken oder die Kubusecken (4a, 4b,...4n) die gesamte der Lichtquelle entgegengesetzte Stirnseite des Lichtleiters bedecken.

6. Einrichtung nach einem der vorhergehenden Ansprüche,
**dadurch gekennzeichnet, dass** der Lichtleiter (G) eine längliche Form (1) hat, insbesondere eine zylindrische oder prismatische Form.

7. Einrichtung nach Anspruch 6,
**dadurch gekennzeichnet, dass** die Kubusecken (4a, 4b,...4n) oder die abgeschrägte(n) Ecke(n) an einem einzigen Längsende vorgesehen ist (sind), wobei die Lichtquelle(n) an einem anderen Ende vorgesehen ist (sind).

8. Einrichtung nach einem der Ansprüche 1 bis 5,
**dadurch gekennzeichnet, dass** der Lichtleiter (G) die Form einer Bahn (9) hat, von der wenigstens eine große Seite mit Mustern versehen ist, um das Licht nach außen zu streuen oder zu reflektieren.

9. Einrichtung nach Anspruch 8,
**dadurch gekennzeichnet, dass** die Lichtquelle(n) an einem (10) der Ränder der Bahn angeordnet ist (sind), und dass die Kubusecken (4a, 4b,...) oder die abgeschrägten Ecken wenigstens an dem entgegengesetzten Rand (11) der Bahn vorgesehen sind.

10. Einrichtung nach einem der vorhergehenden Ansprüche,
**dadurch gekennzeichnet, dass** die Kanten der Kubusecken oder der abgeschrägten Ecken (4a, 4b,...4n) eine Länge von maximal ca. 10 mm haben.

11. Einrichtung nach einem der vorhergehenden Ansprüche,
**dadurch gekennzeichnet, dass** es sich um eine Fahrzeugleuchte oder eine Fahrzeuginnenbeleuchtung handelt.
